(19) Europäisches Patentamt / European Patent Office / Office européen des brevets

(11) **EP 3 289 438 B1**

(12) **FASCICULE DE BREVET EUROPEEN**

(45) Date de publication et mention
de la délivrance du brevet:
**25.03.2020 Bulletin 2020/13**

(21) Numéro de dépôt: **16724296.5**

(22) Date de dépôt: **28.04.2016**

(51) Int Cl.:
**G06F 3/038** (2013.01)      **G06F 3/0346** (2013.01)
**G08C 17/02** (2006.01)      **H04W 4/02** (2018.01)

(86) Numéro de dépôt international:
**PCT/EP2016/059557**

(87) Numéro de publication internationale:
**WO 2016/174170 (03.11.2016 Gazette 2016/44)**

(54) **PROCÉDÉ DE CONTRÔLE D'UN DISPOSITIF DE CALCUL VIA UN ÉLÉMENT MOBILE ET SYSTÈME DE CONTRÔLE METTANT EN OEUVRE CE PROCÉDÉ**

VERFAHREN ZUR STEUERUNG EINER BERECHNUNGSVORRICHTUNG ÜBER EIN MOBILES ELEMENT UND STEUERSYSTEM ZUR IMPLEMENTIERUNG DIESES VERFAHRENS

METHOD OF CONTROLLING A CALCULATION DEVICE VIA A MOBILE ELEMENT AND CONTROL SYSTEM IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2015 FR 1553820**

(43) Date de publication de la demande:
**07.03.2018 Bulletin 2018/10**

(73) Titulaires:
• **Centre National d'Etudes Spatiales**
  **75001 Paris (FR)**
• **Vega France**
  **31100 Toulouse (FR)**

(72) Inventeurs:
• **DESPLATS, Romain**
  **31320 Castanet Tolosan (FR)**
• **LOPEZ, Jean-Louis**
  **31130 Balma (FR)**

(74) Mandataire: **Delorme, Nicolas et al**
**Cabinet Germain & Maureau**
**12, rue Boileau**
**BP 6153**
**69466 Lyon Cedex 06 (FR)**

(56) Documents cités:
**EP-A1- 2 853 992     US-A1- 2011 227 825**

**Description**

La présente invention concerne un procédé de contrôle d'un dispositif de calcul via un élément mobile manipulable par un utilisateur pour générer au moins une commande de contrôle associée à l'orientation vectorielle de l'élément mobile.

L'élément mobile est, par exemple, un dispositif de pointage ou une manette de jeu manipulable par l'utilisateur de manière distante par rapport au dispositif de calcul. Par dispositif de calcul, on comprend tout dispositif électronique apte à interpréter les commandes de l'utilisateur comme, par exemple, un ordinateur, une console de jeux vidéo, une tablette, un téléphone intelligent, etc.

Les commandes de contrôle sont avantageusement générées en fonction de l'orientation vectorielle de l'élément mobile et permettent, par exemple, de déplacer un pointeur ou tout autre objet sur un dispositif de visualisation connecté au dispositif de calcul ou intégré dans celui-ci. Par l'expression « orientation vectorielle », il est entendu une orientation tridimensionnelle de l'élément mobile dans l'espace ainsi que son orientation par rapport à un repère fixe comme, par exemple, un repère terrestre.

Différents types de procédés permettant de contrôler des dispositifs de calcul via un élément mobile en fonction de son orientation vectorielle et de systèmes de contrôle mettant en œuvre de tels procédés, sont connus dans l'état de la technique.

Ainsi, par exemple, certaines consoles de jeux vidéo comportant une manette de jeu, permettent de déterminer l'orientation vectorielle de cette manette, c'est-à-dire de localiser la manette dans l'espace, en utilisant un repère absolu et fixe par exemple par rapport au repère terrestre.

Un tel repère absolu est fourni généralement par un accessoire de repérage distinct de la manette et disposé de façon fixe à proximité du dispositif de visualisation par exemple. Cet accessoire comporte une pluralité de capteurs infrarouge disposés dans des endroits distincts pour détecter des signaux émis par la manette sous différents angles de vision. Ainsi, pour déterminer l'orientation de la manette, le procédé de contrôle mis en œuvre par la console, utilise les informations issues de ces capteurs ainsi que des informations supplémentaires concernant leurs orientations l'un par rapport à l'autre sur l'accessoire de repérage.

Pour améliorer la précision de localisation de la manette et éventuellement les sensations de l'utilisateur, un ou plusieurs capteurs de mouvement sont intégrés dans la manette. Ainsi, il est connu l'utilisation d'un accéléromètre intégré dans la manette pour détecter des accélérations de la manette, et encore d'un gyroscope intégré pour détecter des variations angulaires de la manette autour d'un ou plusieurs axes. Le procédé de contrôle prend ainsi en compte les mesures fournies par ces capteurs en complément de celles fournies par l'accessoire de repérage.

En conséquence, pour les procédés de contrôle connus, un accessoire de repérage distinct de la manette est utilisé pour fournir une référence absolue. Toutefois, avec l'évolution de la portabilité des dispositifs de calculs vers des dispositifs portables tels que par exemple des tablettes ou des lunettes de visualisation intelligentes, l'intégration d'un tel accessoire de repérage dévient de plus en plus laborieuse, voire impossible dans certains cas.

On connait également un procédé de contrôle d'un objet affiché sur une surface via un élément mobile, divulgué dans EP 2 853 992 A1. Le procédé utilise des mesures par un capteur de mouvement ainsi que des algorithmes de pointage relatif et absolu. Le pointage relatif est préféré pour les basses vitesses et le pointage absolu pour les hautes vitesses. La transition entre les résultats des deux algorithmes est lissée en utilisant une combinaison pondérée des résultats. Le but est que l'utilisateur obtienne des perceptions cohérentes entre ce qui est vu à l'écran et les mouvements impartis au dispositif de pointage.

La présente invention a pour but de proposer un procédé de contrôle d'un dispositif de calcul via un élément mobile utilisant uniquement des mesures fournies par les capteurs intégrés dans l'élément mobile.

À cet effet, la présente invention a pour objet un procédé de contrôle d'un dispositif de calcul via un élément mobile, conforme à la revendication 1.

Suivant d'autres aspects avantageux de l'invention, le procédé comprend une ou plusieurs des caractéristiques des revendications 2 à 8.

L'invention a également pour objet un système de contrôle d'un dispositif de calcul comportant un élément mobile, conforme à la revendication 9.

Suivant d'autres aspects avantageux de l'invention, le système comprend une ou plusieurs des caractéristiques des revendications 10 à 12.

Les caractéristiques et avantages de l'invention apparaîtront à la lecture de la description qui va suivre, donnée uniquement à titre d'exemple non limitatif, et faite en référence aux dessins annexés, sur lesquels :

- la figure 1 est vue schématique d'un système de contrôle d'un dispositif de calcul selon un mode de réalisation préféré de l'invention ;
- la figure 2 est un organigramme d'un procédé de contrôle mis en œuvre par le système de la figure 1 ;
- la figure 3 est schéma illustrant une étape de configuration initiale du procédé de la figure 2 ;

- les figures 4 et 5 illustrent partiellement le système de contrôle selon d'autres modes de réalisation.

Par l'expression « sensiblement égal », il est entendu une relation d'égalité avec une précision de 10%.

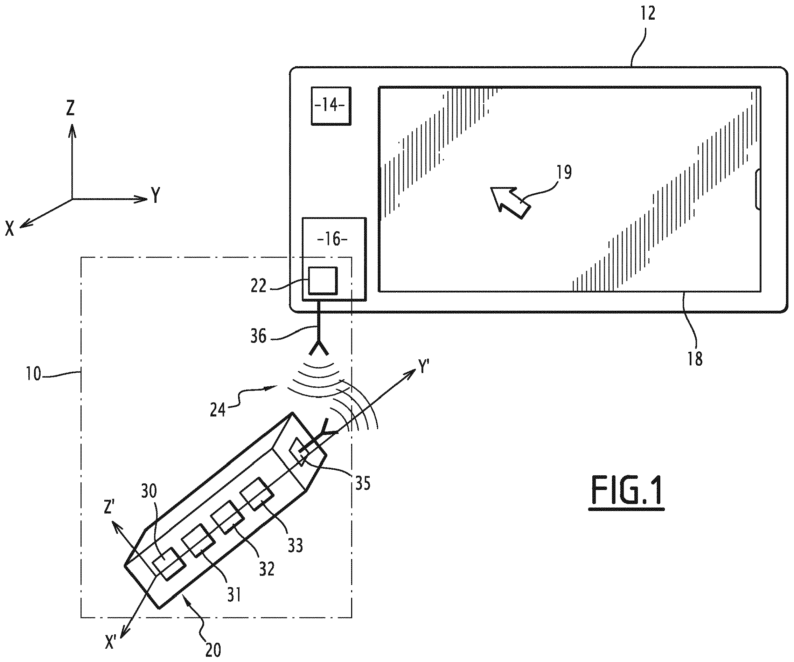

Le système 10 de la figure 1 permet de générer des commandes de contrôle d'un dispositif de calcul 12.

Le dispositif de calcul 12 est un dispositif électronique apte à interpréter des commandes de contrôle données par un utilisateur.

Le dispositif de calcul 12 comporte avantageusement un processeur 14 et un organe de stockage 16 apte à stocker une pluralité de logiciels exécutables par le processeur 14. L'organe de stockage 16 comprend une mémoire interne du dispositif de calcul 12 comme par exemple un disque dur, ou un support externe comme par exemple un disque dur externe ou un disque du type CD ou DVD.

Sur la figure 1, le dispositif de calcul 12 comporte, en outre, un écran de visualisation 18 apte à afficher des informations graphiques fournies par au moins certains des logiciels de l'organe de stockage 16. Ces informations graphiques comprennent, par exemple, un pointeur 19 déplaçable sur l'écran de visualisation 18 par l'utilisateur via des commandes de contrôle.

Ainsi, le dispositif de calcul 12 est, par exemple, un ordinateur, un poste de télévision intelligent, une tablette tactile, un téléphone intelligent, une montre intelligente ou encore des lunettes de visualisation intelligentes.

En variante, le dispositif de calcul 12 est une console de jeux vidéo ou un poste de d'accès à un réseau informatique, comme par exemple un équipement de fournisseur d'accès à Internet du type « box ». Dans ce cas, l'écran de visualisation 18 est intégré dans un dispositif de visualisation distinct du dispositif de calcul 12 et connecté au dispositif de calcul 12.

Le système 10 comporte un élément mobile 20 manipulable par l'utilisateur pour générer des commandes de contrôle destinées au dispositif de calcul 12, une unité de traitement 22 apte à générer ces commandes de contrôle en fonction notamment de l'orientation vectorielle de l'élément mobile 20, et un organe de communication 24 entre l'élément mobile 20 et l'unité de traitement 22.

L'élément mobile 20 présente un objet de forme adaptée pour être manipulé par l'utilisateur. Cette forme assure, par exemple, une bonne tenue de l'élément mobile 20 dans une main de l'utilisateur.

En variante, l'élément mobile 20 est adapté pour être fixé sur une partie mobile du corps de l'utilisateur comme par exemple la tête ou un doigt.

Selon une autre variante, l'élément mobile 20 est adapté pour être fixé sur un élément de vêtements de l'utilisateur.

Dans ces cas, les mouvements de l'élément mobile 20 sont entraînés par les mouvements correspondants de la partie du corps ou de l'élément de vêtements.

L'élément mobile 20 définit un repère mobile RM présentant trois axes mobiles X', Y', Z' linéairement indépendants et fixes par rapport à l'élément mobile 20. Sur la figure 1, l'axe mobile Y' est un axe longitudinal de l'élément mobile 20 et les axes mobiles X' et Z' sont deux axes transversaux perpendiculaires.

Le repère RM est mobile par rapport à un repère fixe RF présentant trois axes fixes X, Y, Z visibles également sur la figure 1. Le repère fixe FM est par exemple un repère terrestre.

Une orientation vectorielle courante $P_k$ de l'élément mobile 20 est définie comme l'orientation tridimensionnelle de repère mobile RM par rapport au repère fixe RF. Le repère mobile RM est obtenu à partir du repère fixe RF en utilisant une rotation d'angle $\theta_k$ par rapport à un axe de rotation défini par un vecteur de rotation $r_{F,k} = [r_{X,k}\ r_{Y,k}\ r_{Z,k}]$.

Ainsi, l'orientation vectorielle courante $P_k$ de l'élément mobile 20 est déterminée dans chaque instant par l'angle de rotation $\theta_k$ et le vecteur de rotation $r_{F,k} = [r_{X,k}\ r_{Y,k}\ r_{Z,k}]$. Pour des raisons de simplicité, cette orientation vectorielle courante $P_k$ de l'élément mobile est exprimée par la suite sous la forme d'un quaternion de passage $q_k$ du repère mobile RM vers le repère fixe RF, le quaternion de passage $q_k$ étant défini par l'expression suivante :

$$q_k = \left[\cos\frac{\theta_k}{2} \quad -r_{X,k}\sin\frac{\theta_k}{2} \quad -r_{Y,k}\sin\frac{\theta_k}{2} \quad -r_{Z,k}\sin\frac{\theta_k}{2}\right].$$

Ainsi, il est possible de déterminer l'angle de rotation $\theta_k$ et le vecteur de rotation $r_{F,k}$ et, en conséquence, l'orientation vectorielle courante $P_k$ de l'élément mobile 20, à partir du quaternion de passage $q_k$.

L'élément mobile 20 comporte un ensemble de capteurs aptes à mesurer au moins certains paramètres physiques relatifs à l'orientation vectorielle courante $P_k$ de l'élément mobile 20 ou à un mouvement de l'élément 20 entre une orientation vectorielle précédente $P_{k-1}$ et l'orientation vectorielle courante $P_k$, et une batterie 30 alimentant l'ensemble de capteurs. Il est entendu par l'expression « orientation vectorielle précédente » $P_{k-1}$, l'orientation vectorielle de l'élément mobile 20 dans un instant antérieur à celui correspondant à l'orientation vectorielle courante $P_k$.

L'ensemble de capteurs comprend un gyroscope 31 apte à mesurer une variation angulaire de l'élément mobile 20 autour de chacun des axes mobiles X', Y', Z' entre l'orientation vectorielle courante $P_k$ et l'orientation vectorielle

précédente $P_{k-1}$, un accéléromètre 32 apte à mesurer l'accélération $\alpha$ de l'élément mobile 20 selon chacun des axes mobiles X', Y', Z', et un magnétomètre 33 apte à mesurer l'intensité du champ magnétique $\boldsymbol{B}$ autour de l'élément mobile 20 selon chacun des axes mobiles X', Y', Z'.

En particulier, l'accéléromètre 32 est apte à mesurer l'influence du champ gravitationnel terrestre $\boldsymbol{g}$ sur chacun des axes mobiles X', Y', Z', et le magnétomètre 33 est apte à mesurer l'intensité du champ magnétique terrestre $\boldsymbol{B_T}$ autour de l'élément mobile 20 selon chacun des axes mobiles X', Y', Z'.

Les mesures fournies en relation avec un mouvement de l'élément 20 entre l'orientation vectorielle précédente $P_{k-1}$ et l'orientation vectorielle courante $P_k$ comme, par exemple, les mesures du gyroscope 31, sont désignées dans la suite par le terme « mesures relatives ».

Les mesures fournies en relation avec uniquement l'orientation vectorielle courante $P_k$ de l'élément mobile 20 comme, par exemple, les mesures de l'accéléromètre 32 et du magnétomètre 33 concernant respectivement le champ gravitationnel terrestre et le champ magnétique terrestre, sont désignées dans la suite par le terme « mesures absolues ».

En complément, l'élément mobile 20 comporte une pluralité de boutons de commande actionnables par l'utilisateur et permettant de générer des commandes de contrôle adaptées pour le dispositif de calcul 12.

L'unité de traitement 22 permet de générer des commandes de contrôle destinées au dispositif de calcul 12 à partir des mesures fournies par l'ensemble de capteurs comme ceci sera expliqué par la suite.

L'unité de traitement 22 est un logiciel stocké dans l'organe de stockage 16 du dispositif de calcul 12 et exécuté par le processeur 14.

En variante, l'unité de traitement 22 est un dispositif de traitement indépendant mettant en œuvre un ou plusieurs logiciels de traitement.

En variante, tout ou partie de l'organe de stockage 16 du dispositif de calcul 12, le processeur 14 et l'unité de traitement 22 sont intégrés dans l'élément mobile 20.

L'organe de communication 24 comporte un module d'émission 35 intégré dans l'élément mobile 20 et raccordé à l'ensemble de capteurs, et un module de réception 36 raccordé à l'unité de traitement 22.

Le module d'émission 35 permet de transmettre les mesures prises par l'ensemble de capteurs et éventuellement les commandes de contrôle générées par les boutons, au module de réception 36.

Le module de réception 36 est intégré, par exemple, dans le dispositif de calcul 12 et permet de recevoir et de transmettre les données émises par le module d'émission 35 à l'unité de traitement 22.

La communication entre le module d'émission 35 et le module de réception 36 est, par exemple, une communication sans fil basée sur un protocole de transmission de données numériques connu en soi.

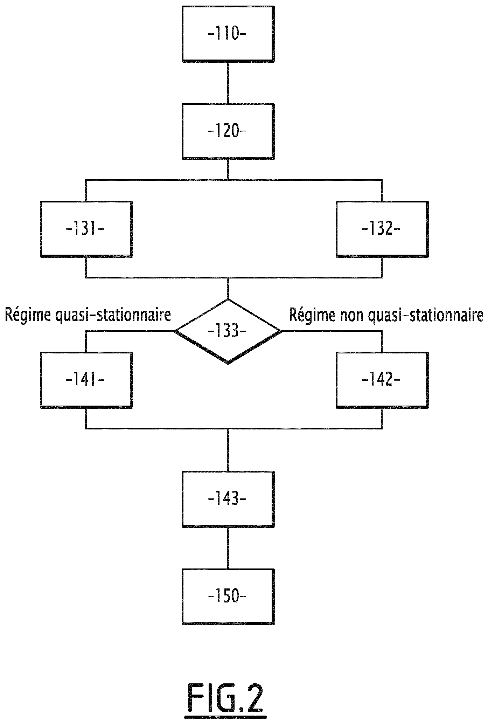

Le procédé de contrôle du dispositif de calcul 12 mis en œuvre par le système 10 va désormais être décrit en référence à la figure 2 présentant un organigramme de ses étapes principales.

Initialement, l'élément mobile 20 est immobilisé et le repère mobile RM est confondu avec le repère fixe RF. L'orientation vectorielle courante $P_k$ de l'élément mobile 20 est donc connue. L'orientation vectorielle précédente $P_{k-1}$ de l'élément mobile 20 est également connue et égale par exemple à l'orientation vectorielle courante $P_k$. Pour cela, le procédé comporte généralement une étape de fourniture d'une orientation vectorielle initiale.

L'accéléromètre 32 et le magnétomètre 33 prennent alors des mesures respectivement de l'accélération du champ gravitationnel terrestre et de l'intensité du champ magnétique terrestre selon chacun des axes mobiles X', Y', Z'.

Ces mesures exprimées par la suite respectivement sous la forme du quaternion $\boldsymbol{G_F} = [0\ G_{F,X}\ G_{F,Y}\ G_{F,Z}]$ et du quaternion $\boldsymbol{B_F} = [0\ B_{F,X}\ B_{F,Y}\ B_{F,Z}]$, sont transmises à l'unité de traitement 22 via l'organe de communication 24.

Le procédé comporte alors une étape 110 de mise en mouvement de l'élément mobile 20.

Lors de l'étape 110 de mise en mouvement, l'utilisateur entraîne un mouvement de l'élément mobile 20 en modifiant l'orientation vectorielle courante $P_k$ pour une nouvelle orientation vectorielle courante P*, l'ensemble de capteurs prennent des mesures relatives caractérisant ce mouvement et des mesures absolues caractérisant la nouvelle orientation vectorielle courante P* de l'élément mobile 20.

Ces mesures comprennent notamment la vitesse angulaire de l'élément mobile 20 selon chacun des axes mobiles X', Y', Z' mesurée par le gyroscope 31 pour une période d'échantillonnage $\Delta t$ sensiblement correspondant à la durée du mouvement, l'accélération de l'élément mobile 20 selon chacun des axes mobiles X', Y', Z' mesurée par l'accéléromètre 32 dans la nouvelle orientation vectorielle courante P* de l'élément mobile 20, et l'intensité du champ magnétique selon chacun des axes mobiles X', Y', Z' mesurée par le magnétomètre 33 dans la nouvelle orientation vectorielle courante P* de l'élément mobile 20.

La vitesse angulaire mesurée est exprimée par la suite sous la forme du quaternion $\omega = [0\ \omega_X\ \omega_Y\ \omega_Z]$, l'accélération sous la forme du quaternion $\boldsymbol{G_M} = [0\ G_{M,X}\ G_{M,Y}\ G_{M,Z}]$, et l'intensité du champ magnétique sous la forme du quaternion

$$\boldsymbol{B_M} = [0\ B_{M,X}\ B_{M,Y}\ B_{M,Z}].$$

Le procédé comporte alors une étape 120 de transmission. Lors de l'étape 120 de transmission, l'ensemble des mesures est transmis à l'unité de traitement 22 via l'organe de communication 24.

Le procédé comprend alors une étape 131 de première détermination. Plus précisément, lors de l'étape 131 de détermination, l'unité de traitement 22 détermine une première orientation élémentaire $P^1$ de l'élément mobile 20 à partir des mesures relatives fournies par le gyroscope 31, de l'orientation vectorielle courante $P_k$ de l'élément mobile 20, et de l'orientation vectorielle précédente $P_{k-1}$ de l'élément mobile 20.

Plus particulièrement, la première orientation élémentaire $P^1$ exprimée sous la forme d'un premier quaternion élémentaire $q^1$, est obtenue à partir de la formule suivante :

$$q^1 = \frac{\Delta t}{2} q_k \otimes \omega + q_{k-1},$$

où

- $q_k$ est le quaternion de passage correspondant à l'orientation vectorielle courante $P_k$ de l'élément mobile 20 ;
- $q_{k-1}$ est le quaternion de passage correspondant à l'orientation vectorielle précédente $P_{k-1}$ de l'élément mobile 20 ; et
- $\otimes$ est l'opération de la multiplication des quaternions définie pour deux quelconques quaternions $\alpha = [a_1\ a_2\ a_3\ a_4]$ et $b = [b_1\ b_2\ b_3\ b_4]$ de la manière suivante :

$$a \otimes b = \begin{bmatrix} a_1 b_1 - a_2 b_2 - a_3 b_3 - a_4 b_4 \\ a_1 b_2 + a_2 b_1 + a_3 b_4 - a_4 b_3 \\ a_1 b_3 - a_2 b_4 + a_3 b_1 + a_4 b_2 \\ a_1 b_4 + a_2 b_3 - a_3 b_2 + a_4 b_1 \end{bmatrix}^T.$$

Le procédé comprend également une étape 132 de deuxième détermination. Lors de l'étape 132 de deuxième détermination, l'unité de traitement 22 détermine une deuxième orientation élémentaire $P^2$ de l'élément mobile 20 à partir des mesures absolues fournies par l'accéléromètre 32 et le magnétomètre 33.

Plus particulièrement, la deuxième orientation élémentaire $P^2$ exprimée sous la forme d'un deuxième quaternion élémentaire $q^2$, est obtenue en résolvant le système d'équations suivant :

$$\begin{cases} q^2 \otimes G_F \otimes q^{2*} - G_M = 0 \\ q^2 \otimes B_F \otimes q^{2*} - B_M = 0 \end{cases}'$$

où le symbole « * » désigne l'opération du conjugué du quaternion définie pour un quaternion $\alpha = [a_1\ a_2\ a_3\ a_4]$ quelconque de la manière suivante :

$$a^* = \begin{bmatrix} a_1 & -a_2 & -a_3 & -a_4 \end{bmatrix}.$$

Ce système est résolu en utilisant par exemple une méthode numérique.

Les étapes 131 et 132 de détermination sont avantageusement exécutées en parallèle.

Le procédé comporte ensuite une étape 133 de détermination du régime du mouvement de l'élément mobile 20.

Plus précisément, selon l'exemple de la figure 2, lors de l'étape 133 de détermination du régime, l'unité de traitement 22 détermine si le mouvement de l'élément mobile 20 est un régime quasi-stationnaire ou un régime non quasi-stationnaire.

Pour cela, l'unité de traitement 22 met en œuvre un critère de stationnarité consistant à comparer une accélération effective $\dot{q}_k$ de l'élément mobile 20 lors du mouvement avec un seuil S prédéterminé.

L'accélération effective $\dot{q}_k$ est déterminée numériquement à partir des orientations vectorielles courante $P_k$ et précédente $P_{k-1}$ en utilisant par exemple l'expression suivante :

$$\dot{q}_k = \frac{q_k - q_{k-1}}{\Delta t}.$$

Ainsi, lorsqu'une norme $\|\dot{q}_k\|$ de l'accélération effective $\dot{q}_k$ par exemple la norme $\|...\|_2$ consistant à calculer la racine carrée de la somme des carrées des composants du quaternion correspondant, est inférieure au seuil S, il s'agit du régime quasi-stationnaire et l'unité de traitement 22 met en œuvre une étape 141 de première détermination d'un paramètre. Dans le cas contraire, il s'agit du régime non quasi-stationnaire et l'unité de traitement 22 met en œuvre une étape 142 de deuxième détermination d'un paramètre.

Lors de chacune des étapes 141 et 142 de détermination, l'unité de traitement 22 détermine un paramètre de stabilisation K caractérisant le temps de stabilisation du régime non quasi-stationnaire vers le régime quasi-stationnaire.

Plus particulièrement, lors de l'étape 141 de première détermination d'un paramètre, cas qui correspond au régime quasi-stationnaire, l'unité de traitement 22 met le paramètre K égal à une valeur de stabilisation prédéterminée qui est strictement supérieure à 0 et inférieure ou égale à 1.

A contrario, lors de l'étape 142 de deuxième détermination d'un paramètre, cas qui correspond au régime non quasi-stationnaire, l'unité de traitement 22 impose pour le paramètre K une valeur égale à 0.

Après la mise en œuvre de l'une des étapes de détermination du paramètre de stabilisation K, il est mis en œuvre une étape 143 de détermination de la nouvelle orientation vectorielle courante P*.

Lors de l'étape 143, l'unité de traitement 22 détermine la nouvelle orientation vectorielle courante P* à partir de la première orientation élémentaire $P^1$, de la deuxième orientation courante $P^2$ et du paramètre de stabilisation K.

En particulier, le quaternion $\boldsymbol{q}^*$ correspondant à la nouvelle orientation vectorielle courante P*, est déterminé en utilisant l'expression suivante :

$$\boldsymbol{q}^* = \boldsymbol{q}^1 + K(\boldsymbol{q}^2 - \boldsymbol{q}^1).$$

L'unité de traitement 22 associe la nouvelle orientation vectorielle courante P* à l'orientation vectorielle courante $P_k$, et l'orientation vectorielle courante $P_k$ à l'orientation vectorielle précédente $P_{k-1}$, c'est-à-dire que l'unité de traitement 22 utilise les équations suivantes:

$$\boldsymbol{q}_{k-1} = \boldsymbol{q}_k, \qquad \boldsymbol{q}_k = \boldsymbol{q}^*.$$

Le procédé comporte ensuite une étape 150 de génération une commande de contrôle. Plus précisément, l'unité de traitement 22 génère une commande de contrôle associée à l'orientation vectorielle courante $P_k$ de l'élément mobile 20 et transmet cette commande au dispositif de calcul 12.

Ainsi, par exemple, lorsque l'élément mobile 20 est un dispositif de pointage utilisé pour déplacer le pointeur 19 sur l'écran de visualisation 18, l'unité de traitement 20 génère une commande de contrôle consistant à déplacer le pointeur 19 dans le point de l'écran de visualisation 18 correspondant à l'orientation vectorielle courante $P_k$ de l'élément mobile 20.

La présente invention présente ainsi un certain nombre d'avantages.

En particulier, l'utilisation simultanée des mesures fournies par l'accéléromètre 32 et le magnétomètre 33 permet de déterminer l'orientation vectorielle de l'élément mobile 20 sans utilisation d'un accessoire de repérage supplémentaire. Ceci permet alors d'utiliser le système 10 avec divers types de dispositifs de calcul, y compris des dispositifs portables comme les tablettes, les téléphones intelligents et les lunettes de visualisation intelligentes.

De plus, la détermination de l'orientation vectorielle courante $P_k$ de l'élément mobile 20 selon le procédé, est particulièrement fiable, car une distinction entre le régime quasi-stationnaire et non quasi-stationnaire est introduite. En effet, dans le régime quasi-stationnaire, l'orientation vectorielle de l'élément mobile 20 déterminée à partir des mesures relatives, est plus fiable et robuste que celle déterminée uniquement à partir des mesures absolues. En revanche, dans le régime non quasi-stationnaire, l'orientation vectorielle déterminée à partir des mesures relatives, est peu fiable, et l'orientation déterminée à partir des mesures absolues est retenue.

Finalement, contrairement aux systèmes de contrôle existants, le système 10 n'a pas besoin de calibrage des capteurs, notamment du gyroscope, fournissant des mesures relatives. En effet, un tel équilibrage se fait numériquement dans le régime non quasi-stationnaire lorsque les mesures absolues sont principalement utilisées pour déterminer l'orientation vectorielle courante $P_k$ de l'élément mobile 20.

Selon un aspect complémentaire de l'invention, le procédé de contrôle comprend une étape de configuration initiale du système 10 par rapport à l'écran de visualisation 18. Cette configuration permet notamment d'adapter les commandes de contrôle générées par l'unité de traitement 22 aux dimensions de l'écran de visualisation 18.

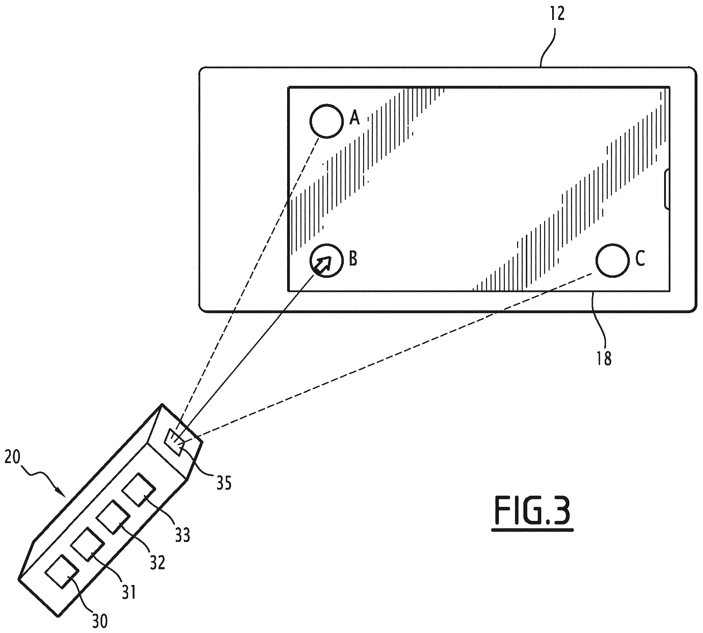

Ainsi, par exemple, lorsque l'élément mobile 20 est un dispositif de pointage utilisé pour déplacer le pointeur 19 sur l'écran de visualisation 18, l'utilisateur est invité à pointer avec l'élément mobile 20 dans trois points distincts A, B, C lors de l'étape de configuration initiale comme ceci est illustré sur la figure 3. À chaque pointage A, B, C, l'unité de traitement détermine l'orientation vectorielles courante $P_A$, $P_B$, $P_c$ dans l'espace de l'élément mobile 20. Ces orientations courantes $P_A$, $P_B$, $P_c$ sont ensuite utilisées par l'unité de traitement pour déterminer la correspondance entre chaque point de l'écran de visualisation 18 et différentes orientations vectorielles de l'élément mobile 20 dans l'espace.

En variante, l'écran de visualisation est remplacé par un système immersif 3D. Les points A, B, C sont alors des points de l'environnement, l'affichage de ces points pouvant se faire par réalité augmentée.

L'étape de configuration initiale est, par exemple, lancée avant chaque utilisation du système de contrôle 10 ou pendant l'utilisation du système de contrôle lorsqu'il convient, par exemple, de changer l'écran de visualisation 18 ou de réajuster ses dimensions.

En variante, l'étape de configuration initiale est lancée une fois par chaque nouvel écran 18 et la correspondance déterminée lors de cette étape est mémorisée dans les moyens de mémorisation 16.

Bien entendu, d'autres exemples de configuration initiale du système de contrôle 10 par rapport à l'écran de visualisation 18 ou tout autre objet, sont également possibles.

Selon encore un autre aspect complémentaire de l'invention, le procédé de contrôle comprend une étape de calcul de la position absolue de l'élément mobile 20 par rapport au repère fixe RF. L'orientation absolue comprend notamment une translation et une rotation du repère mobile RM par rapport au repère fixe RF. La translation est calculée à partir des mesures de l'accélération de l'élément mobile 20 selon chacun des axes mobiles X', Y', Z' fournies par l'accéléromètre 32.

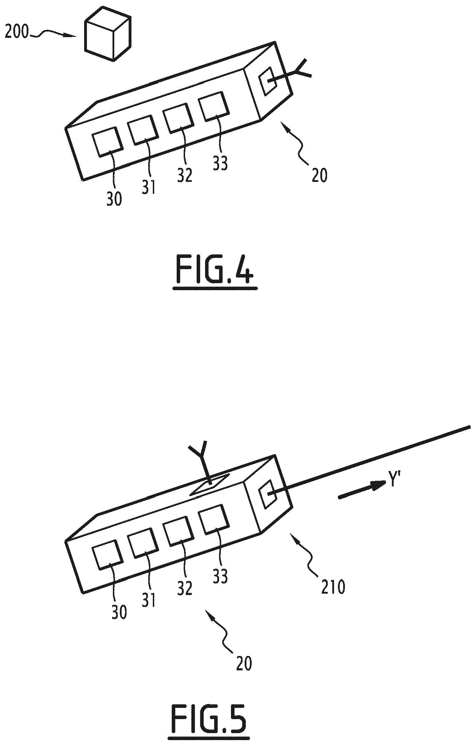

Selon le mode de réalisation de l'invention illustré sur la figure 4, le système 10 comporte en outre un élément magnétique 200 apte à modifier le champ magnétique autour de l'élément mobile 20.

L'élément magnétique 200 est, par exemple, un aimant permanent fixé sur un élément de vêtements de l'utilisateur, sur une partie de son corps ou sur tout autre objet à proximité de l'utilisateur.

Ainsi, lorsque l'élément mobile 20 est approché de l'élément magnétique 200, le champ magnétique autour de l'élément mobile 20 est fortement perturbé. Cette perturbation est mesurée par le magnétomètre 33 et la mesure correspondante est transmise à l'unité de traitement 22 pour générer une commande de contrôle correspondante.

En variante, plusieurs magnétomètres sont intégrés dans l'élément mobile 20. Ceci permet de modéliser mieux le champ magnétique autour de l'élément mobile 20 et éventuellement de déterminer la position de l'élément magnétique 200 par rapport à l'élément mobile.

Ce mode de réalisation est particulièrement adapté aux jeux vidéo dans lesquels l'élément magnétique 200 a une signification particulière.

Selon le mode de réalisation de l'invention illustré sur la figure 5, l'élément mobile 20 comporte en outre un dispositif d'éclairage 210 du type laser. La direction d'émission du flux lumineux par le dispositif d'éclairage 210 est, par exemple, confondue avec l'axe longitudinal Y' de l'élément mobile 20.

Selon ce mode de réalisation, le procédé de contrôle comprend en outre une étape de contrôle de l'intensité du flux lumineux émis par le dispositif d'éclairage 210. Ainsi, par exemple, lorsque l'élément mobile 20 est utilisé en tant qu'un dispositif de pointage selon l'axe longitudinal Y', l'étape de contrôle de l'intensité du flux lumineux consiste à augmenter l'intensité du flux de manière progressive lorsque le pointeur dirigé par l'élément mobile 20 s'approche à une cible disposée sur l'écran de visualisation 18 ou dans un autre point prédéterminé de l'espace.

Selon encore un autre mode de réalisation (non-représenté), l'élément mobile 20 comporte, en outre, une caméra intégrée.

Le champ de vision de la caméra est orienté par exemple selon l'axe longitudinal Y' de l'élément mobile 20.

Ainsi, l'orientation vectorielle de la caméra est connue à chaque instant par l'unité de traitement 22 ce qui lui permet de générer des commandes de contrôle adaptées.

Selon encore un autre mode de réalisation (non-représenté), le système de contrôle 10 comporte plusieurs éléments mobiles 20 tels que décrit précédemment. Dans ce cas, le procédé de contrôle est adapté pour déterminer l'orientation vectorielle de chacun de ces éléments mobile 20 pour générer des commandes de contrôle adaptées. Ces commandes de contrôle prennent en compte par exemple l'orientation relative de l'un des éléments mobiles 20 par rapport aux autres.

Selon encore un autre mode de réalisation (non-représenté), l'unité de traitement 22 est intégrée dans l'élément mobile 20 sous la forme d'un logiciel de traitement.

Selon ce mode de réalisation, l'élément mobile 20 comporte en outre un processeur apte à exécuter ce logiciel de traitement. Les commandes de contrôle générées par l'unité de traitement 22 sont envoyées directement vers le dispositif de calcul 12 via des moyens de communication adaptés.

L'homme du métier comprendra que la présente invention ne se limite pas aux modes de réalisation décrits ci-dessus. En effet, la détermination de l'orientation vectorielle d'un élément mobile pour un traitement informatique adapté, permet d'utiliser l'invention dans des nombreux domaines techniques.

Plus particulièrement, les applications de l'invention ne se limitent pas aux jeux. Tout comme pour le produit Kinect® de la société Microsoft® ou la solution proposée par la société Apple® dans le brevet US 8527908 B2, la transposition à un autre domaine d'application se fait sans difficulté.

Dans le domaine de la médecine par exemple, le dispositif selon l'invention peut être utilisé pour effectuer des opérations chirurgicales. Que ce soit pour guider une micro caméra qui serait fixée sur un cathéter ou pour piloter l'outil d'intervention chirurgicale, l'invention apporte une solution qui permet de gagner en précision et flexibilité. De même pour préparer l'intervention en simulation ou avec une impression 3D de la zone d'intervention, l'invention donnera au médecin une expérience, non plus de jeux, mais bien de travail, améliorée. L'invention peut se coupler avec des stimulateurs haptiques ou des stimulateurs de retour de force pour ajouter une sensation physique au déplacement du dispositif de l'invention.

Cet environnement de travail peut être extrapolé à d'autres domaines par exemple le pilotage de robot, l'intervention de technicien sur des machines ou outils complexes ou encore la formation ou le travail collaboratif à distance.

Selon encore un autre aspect complémentaire de l'invention, le procédé de contrôle comprend une étape de calcul de la position absolue de l'élément mobile 20 par rapport au repère fixe RF. L'orientation absolue comprend notamment une translation et une rotation du repère mobile RM par rapport au repère fixe RF. La translation est calculé à partir des mesures de l'accélération de l'élément mobile 20 selon chacun des axes mobiles X', Y', Z' fournies par l'accéléromètre 32.

Selon le mode de réalisation de l'invention illustré sur la figure 4, le système 10 comporte en outre un élément magnétique 200 apte à modifier le champ magnétique autour de l'élément mobile 20.

L'élément magnétique 200 est, par exemple, un aimant permanent fixé sur un élément de vêtements de l'utilisateur, sur une partie de son corps ou sur tout autre objet à proximité de l'utilisateur.

Ainsi, lorsque l'élément mobile 20 est approché de l'élément magnétique 200, le champ magnétique autour de l'élément mobile 20 est fortement perturbé. Cette perturbation est mesurée par le magnétomètre 33 et la mesure correspondante est transmise à l'unité de traitement 22 pour générer une commande de contrôle correspondante.

En variante, plusieurs magnétomètres sont intégrés dans l'élément mobile 20. Ceci permet de modéliser mieux le champ magnétique autour de l'élément mobile 20 et éventuellement de déterminer la position de l'élément magnétique 200 par rapport à l'élément mobile.

Ce mode de réalisation est particulièrement adapté aux jeux vidéo dans lesquels l'élément magnétique 200 a une signification particulière.

Selon le mode de réalisation de l'invention illustré sur la figure 5, l'élément mobile 20 comporte en outre un dispositif d'éclairage 210 du type laser. La direction d'émission du flux lumineux par le dispositif d'éclairage 210 est, par exemple, confondue avec l'axe longitudinal Y' de l'élément mobile 20.

Selon ce mode de réalisation, le procédé de contrôle comprend en outre une étape de contrôle de l'intensité du flux lumineux émis par le dispositif d'éclairage 210. Ainsi, par exemple, lorsque l'élément mobile 20 est utilisé en tant qu'un dispositif de pointage selon l'axe longitudinal Y', l'étape de contrôle de l'intensité du flux lumineux consiste à augmenter l'intensité du flux de manière progressive lorsque le pointeur dirigé par l'élément mobile 20 s'approche à une cible disposée sur l'écran de visualisation 18 ou dans un autre point prédéterminé de l'espace.

Selon encore un autre mode de réalisation (non-représenté), l'élément mobile 20 comporte, en outre, une caméra intégrée.

Le champ de vision de la caméra est orienté par exemple selon l'axe longitudinal Y' de l'élément mobile 20.

Ainsi, l'orientation vectorielle de la caméra est connue à chaque instant par l'unité de traitement 22 ce qui lui permet de générer des commandes de contrôle adaptées.

Selon encore un autre mode de réalisation (non-représenté), le système de contrôle 10 comporte plusieurs éléments mobiles 20 tels que décrit précédemment. Dans ce cas, le procédé de contrôle est adapté pour déterminer l'orientation vectorielle de chacun de ces éléments mobile 20 pour générer des commandes de contrôle adaptées. Ces commandes de contrôle prennent en compte par exemple l'orientation relative de l'un des éléments mobiles 20 par rapport aux autres.

Selon encore un autre mode de réalisation (non-représenté), l'unité de traitement 22 est intégré dans l'élément mobile 20 sous la forme d'un logiciel de traitement.

Selon ce mode de réalisation, l'élément mobile 20 comporte en outre un processeur apte à exécuter ce logiciel de traitement. Les commandes de contrôle générées par l'unité de traitement 22 sont envoyées directement vers le dispositif de calcul 12 via des moyens de communication adaptés.

L'homme du métier comprendra que la présente invention ne se limite pas aux modes de réalisation décrits ci-dessus. En effet, la détermination de l'orientation vectorielle d'un élément mobile pour un traitement informatique adapté, permet d'utiliser l'invention dans des nombreux domaines techniques.

Plus particulièrement, les applications de l'invention ne se limitent pas aux jeux. Tout comme pour le produit Kinect® de la société Microsoft® ou la solution proposée par la société Apple® dans le brevet US 8527908 B2, la transposition à un autre domaine d'application se fait sans difficulté.

Dans le domaine de la médecine par exemple, le dispositif selon l'invention peut être utilisé pour effectuer des opérations chirurgicales. Que ce soit pour guider un micro caméra qui serait fixé sur un cathéter ou pour piloter l'outil d'intervention chirurgicale, l'invention apporte une solution qui permet de gagner en précision et flexibilité. De même pour préparer l'intervention en simulation ou avec une impression 3D de la zone d'intervention, l'invention donnera au médecin une expérience, non plus de jeux, mais bien de travail, améliorée. L'invention peut se coupler avec des stimulateurs haptiques ou des stimulateurs de retour de force pour ajouter une sensation physique au déplacement du dispositif de l'invention.

Cet environnement de travail peut être extrapolé à d'autres domaines par exemple le pilotage de robot, l'intervention de technicien sur des machines ou outils complexes ou encore la formation ou le travail collaboratif à distance.

## Revendications

1. Procédé de contrôle d'un dispositif de calcul (12) via un élément mobile (20) manipulable par un utilisateur pour générer au moins une commande de contrôle associée à l'orientation vectorielle de l'élément mobile (20), le procédé étant mis en œuvre par un système de contrôle (10) comportant une unité de traitement (22) apte à communiquer avec l'élément mobile (20) et le dispositif de calcul (12), l'élément mobile (20) comportant un ensemble de capteurs (31, 32, 33) aptes à fournir à l'unité de traitement (22) des premières mesures, dites mesures relatives, et des deuxièmes mesures, dites mesures absolues, caractérisant l'orientation vectorielle de l'élément mobile (20),

   les mesures relatives comprenant une variation angulaire de l'élément mobile (20) autour d'au moins un axe (X', Y', Z') prédéterminé fixe par rapport à l'élément mobile (20) entre une orientation vectorielle précédente ($P_{k-1}$) et une orientation vectorielle courante ($P_k$),

   les mesures absolues comprenant l'accélération de l'élément mobile (20) au moins selon l'axe (X', Y', Z') prédéterminé et l'intensité d'un champ magnétique autour de l'élément mobile (20) selon au moins l'axe (X', Y', Z') prédéterminé,

   le procédé comportant les étapes suivantes :

   - fourniture d'une orientation vectorielle initiale ;
   - prise de mesures (110) par l'ensemble de capteurs (31, 32, 33) à chaque mouvement de l'élément mobile (20) entraîné par l'utilisateur ;
   - détermination (131) d'une première orientation vectorielle élémentaire ($P^1$) de l'élément mobile (20) à partir des mesures relatives et de l'orientation vectorielle précédente ($P_{k-1}$) ;
   - détermination (132) d'une deuxième orientation vectorielle élémentaire ($P^2$) de l'élément mobile (20) à partir des mesures absolues ;
   - détermination (143) de l'orientation vectorielle courante ($P_k$) de l'élément mobile (20) à partir de la première orientation vectorielle élémentaire ($P^1$) et de la deuxième orientation vectorielle élémentaire ($P^2$) ; et
   - association (150) d'une commande de contrôle à l'orientation vectorielle courante ($P_k$) de l'élément mobile (20).

2. Procédé selon la revendication 1, comportant, en outre, une étape (133) de détermination du régime du mouvement de l'élément mobile (20), le régime étant un régime quasi-stationnaire ou non quasi-stationnaire.

3. Procédé selon la revendication 2, dans lequel l'étape (133) de détermination du régime de mouvement comprend la comparaison d'une valeur correspondant à la vitesse de changement de l'orientation de l'élément mobile (20) avec un seuil (S) prédéterminé.

4. Procédé selon la revendication 2 ou 3, dans lequel l'orientation vectorielle courante ($P_k$) de l'élément mobile (20) est déterminée en outre à partir d'un paramètre de stabilisation (K) compris entre 0 et 1, et caractérisant le temps de stabilisation du régime non quasi-stationnaire vers le régime quasi-stationnaire.

5. Procédé selon la revendication 4, dans lequel :

   - lorsque le paramètre de stabilisation (K) est compris entre 0,9 et 1, l'orientation vectorielle courante ($P_k$) de l'élément mobile (20) est égale à la première orientation vectorielle élémentaire ($P^1$) ; et
   - lorsque le paramètre de stabilisation (K) est compris entre 0 et 0,1, l'orientation vectorielle courante ($P_k$) de l'élément mobile (20) est égale à la deuxième orientation vectorielle élémentaire ($P^2$).

6. Procédé selon l'une quelconque des revendications 1 à 5, dans lequel les mesures absolues comprennent en outre l'influence du champ gravitationnel terrestre sur au moins l'axe (X',Y',Z') prédéterminé de l'élément mobile (20) et l'influence du champ magnétique terrestre sur au moins l'axe prédéterminé de l'élément mobile (20).

7. Procédé selon l'une quelconque des revendications 1 à 6, comprenant, en outre, une étape de détermination de la position absolue de l'élément mobile (20) à partir de l'accélération mesurée selon au moins l'axe (X', Y', Z') prédéterminé de l'élément mobile (20).

**8.** Procédé selon l'une quelconque des revendications 1 à 7, comprenant, en outre, une étape de configuration initiale du système de contrôle (10) permettant de déterminer une correspondance entre chaque orientation vectorielle de l'élément mobile (20) et un dispositif de visualisation (18).

**9.** Système de contrôle (10) d'un dispositif de calcul (12) comportant :

- un élément mobile (20) manipulable par un utilisateur pour générer au moins une commande de contrôle associée à l'orientation vectorielle de l'élément mobile (20) et destinée au dispositif de calcul (12) ;
- une unité de traitement (22) apte à communiquer avec l'élément mobile (20) et le dispositif de calcul (12) ;

l'élément mobile (20) comportant un ensemble de capteurs (31, 32, 33) aptes à fournir à l'unité de traitement (22) des mesures relatives et des mesures absolues caractérisant l'orientation vectorielle de l'élément mobile (20) ;
les mesures relatives comprenant une variation angulaire de l'élément mobile (20) autour d'au moins un axe (X', Y', Z') prédéterminé fixe par rapport à l'élément mobile (20) entre une orientation vectorielle précédente ($P_{k-1}$) et une orientation vectorielle courante ($P_k$) ;
les mesures absolues comprenant l'accélération de l'élément mobile (20) au moins selon l'axe (X', Y', Z') prédéterminé et l'intensité d'un champ magnétique autour de l'élément mobile (20) selon au moins l'axe (X', Y', Z') prédéterminé ;
l'élément mobile (20) étant apte à :

- prendre des mesures par l'ensemble de capteurs (31, 32, 33) à chaque mouvement de l'élément mobile (20) entraîné par l'utilisateur ; et
- transmettre les mesures obtenues à l'unité de traitement (22) ;

l'unité de traitement (22) étant apte à :

- fournir une orientation vectorielle initiale ;
- déterminer une première orientation vectorielle élémentaire ($P^1$) de l'élément mobile (20) à partir des mesures relatives et de l'orientation vectorielle précédente ($P_{k-1}$) ;
- déterminer une deuxième orientation vectorielle élémentaire ($P^2$) de l'élément mobile (20) à partir des mesures absolues ;
- déterminer l'orientation vectorielle courante ($P_k$) de l'élément mobile (20) à partir de la première orientation vectorielle élémentaire ($P^1$) et de la deuxième orientation vectorielle élémentaire ($P^2$) ; et
- associer une commande de contrôle à l'orientation vectorielle courante ($P_k$) de l'élément mobile (20).

**10.** Système (10) selon la revendication 9, dans lequel l'ensemble de capteurs (31, 32, 33) comprend un gyroscope (31) pour mesurer la variation angulaire de l'élément mobile (20) autour d'au moins l'axe (X', Y', Z') prédéterminé, un accéléromètre (32) pour mesurer l'accélération de l'élément mobile (20) selon au moins l'axe (X', Y', Z') prédéterminé, et un magnétomètre (33) pour mesurer l'influence d'un champ magnétique sur l'élément mobile (20) selon au moins l'axe (X', Y', Z') prédéterminé.

**11.** Système (10) selon la revendication 9 ou 10, comportant, en outre, un élément magnétique (200) distinct de l'élément mobile (20) et propre à générer un champ magnétique à proximité de l'élément mobile (20).

**12.** Système (10) selon la revendication 11, dans lequel l'ensemble de capteurs (31, 32, 33) comporte plusieurs magnétomètres.

**Patentansprüche**

**1.** Verfahren zur Steuerung einer Berechnungsvorrichtung (12) über ein mobiles Element (20), das von einem Benutzer bedienbar ist, um mindestens einen Steuerbefehl zu erzeugen, der der Vektorausrichtung des mobilen Elements (20) zugeordnet ist, wobei das Verfahren von einem Steuersystem (10) durchgeführt wird, das eine Verarbeitungseinheit (22) aufweist, die imstande ist, mit dem mobilen Element (20) und der Berechnungsvorrichtung (12) zu kommunizieren, wobei das mobile Element (20) eine Gruppe von Sensoren (31, 32, 33) aufweist, die imstande sind, der Verarbeitungseinheit (22) erste Messungen, bezeichnet als relative Messungen, und zweite Messungen, bezeichnet als absolute Messungen, bereitzustellen, welche die Vektorausrichtung des mobilen Elements (20) kennzeichnen,

wobei die relativen Messungen eine Winkelvariation des mobilen Elements (20) um mindestens eine vorher festgelegte feste Achse (X', Y', Z') in Bezug auf das mobile Element (20) zwischen einer vorhergehenden Vektorausrichtung ($P_{k-1}$) und einer laufenden Vektorausrichtung ($P_k$) umfassen,

wobei die absoluten Messungen die Beschleunigung des mobilen Elements (20) mindestens gemäß der vorher festgelegten Achse (X', Y', Z') und die Stärke eines Magnetfelds um das mobile Element (20) gemäß mindestens der vorher festgelegten Achse (X', Y', Z') umfassen,

wobei das Verfahren die folgenden Schritte aufweist:

- Bereitstellen einer Ausgangs-Vektorausrichtung;
- Durchführen von Messungen (110) durch die Gruppe von Sensoren (31, 32, 33) bei jeder vom Benutzer verursachten Bewegung des mobilen Elements (20);
- Bestimmen (131) einer ersten elementaren Vektorausrichtung ($P^1$) des mobilen Elements (20) auf der Basis der relativen Messungen und der vorhergehenden Vektorausrichtung ($P_{k-1}$);
- Bestimmen (132) einer zweiten elementaren Vektorausrichtung ($P^2$) des mobilen Elements (20) auf der Basis der absoluten Messungen;
- Bestimmen (143) der laufenden Vektorausrichtung ($P_k$) des mobilen Elements (20) auf der Basis der ersten elementaren Vektorausrichtung ($P^1$) und der zweiten elementaren Vektorausrichtung ($P^2$); und
- Zuordnen (150) eines Steuerbefehls zu der laufenden Vektorausrichtung ($P_k$) des mobilen Elements (20).

2. Verfahren nach Anspruch 1, ferner aufweisend einen Schritt (133) des Bestimmens des Bewegungssystems des mobilen Elements (20), wobei das System ein quasi-stationäres oder nicht quasi-stationäres System ist.

3. Verfahren nach Anspruch 2, wobei der Schritt (133) des Bestimmens des Bewegungssystems den Vergleich eines Wertes, welcher der Veränderungsgeschwindigkeit der Ausrichtung des mobilen Elements (20) entspricht, mit einem vorher festgelegten Grenzwert (S) umfasst.

4. Verfahren nach Anspruch 2 oder 3, wobei die laufende Vektorausrichtung ($P_k$) des mobilen Elements (20) ferner auf der Basis eines Stabilisierungsparameters (K) bestimmt wird, der zwischen 0 und 1 liegt und die Stabilisierungszeit des nicht quasi-stationären Systems gegenüber dem quasi-stationären System kennzeichnet.

5. Verfahren nach Anspruch 4, wobei:

- wenn der Stabilisierungsparameter (K) zwischen 0,9 und 1 liegt, die laufende Vektorausrichtung ($P_k$) des mobilen Elements (20) gleich der ersten elementaren Vektorausrichtung ($P^1$) ist; und
- wenn der Stabilisierungsparameter (K) zwischen 0 und 0,1 liegt, die laufende Vektorausrichtung ($P_k$) des mobilen Elements (20) gleich der zweiten elementaren Vektorausrichtung ($P^2$) ist.

6. Verfahren nach einem der Ansprüche 1 bis 5, wobei die absoluten Messungen ferner den Einfluss des Erdgravitationsfelds auf mindestens die vorher festgelegte Achse (X', Y', Z') des mobilen Elements (20) und den Einfluss des Erdmagnetfelds auf mindestens die vorher festgelegte Achse des mobilen Elements (20) umfassen.

7. Verfahren nach einem der Ansprüche 1 bis 6, ferner umfassend einen Schritt des Bestimmens der absoluten Position des mobilen Elements (20) auf der Basis der Beschleunigung, gemessen gemäß mindestens der vorher festgelegten Achse (X', Y', Z') des mobilen Elements (20).

8. Verfahren nach einem der Ansprüche 1 bis 7, ferner umfassend einen Schritt der Ausgangskonfiguration des Steuersystems (10), der erlaubt, eine Übereinstimmung zwischen jeder Vektorausrichtung des mobilen Elements (20) und einer Visualisierungsvorrichtung (18) zu bestimmen.

9. Steuersystem (10) einer Berechnungsvorrichtung (12), aufweisend:

- ein mobiles Element (20), das von einem Benutzer bedienbar ist, um mindestens einen Steuerbefehl zu erzeugen, welcher der Vektorausrichtung des mobilen Elements (20) zugeordnet und für die Berechnungsvorrichtung (12) bestimmt ist;
- eine Verarbeitungseinheit (22), die imstande ist, mit dem mobilen Element (20) und der Berechnungsvorrichtung (12) zu kommunizieren;

wobei das mobile Element (20) eine Gruppe von Sensoren (31, 32, 33) aufweist, die imstande sind, der Verarbeitungseinheit (22) relative Messungen und absolute Messungen bereitzustellen, welche die Vektorausrichtung des mobilen Elements (20) kennzeichnen,
wobei die relativen Messungen eine Winkelvariation des mobilen Elements (20) um mindestens eine vorher festgelegte feste Achse (X', Y', Z') in Bezug auf das mobile Element (20) zwischen einer vorhergehenden Vektorausrichtung ($P_{k-1}$) und einer laufenden Vektorausrichtung ($P_k$) umfassen,
wobei die absoluten Messungen die Beschleunigung des mobilen Elements (20) mindestens gemäß der vorher festgelegten Achse (X', Y', Z') und die Stärke eines Magnetfelds um das mobile Element (20) gemäß mindestens der vorher festgelegten Achse (X', Y', Z') umfassen,
wobei das mobile Element (20) imstande ist:

- Messungen durch die Gruppe von Sensoren (31, 32, 33) bei jeder vom Benutzer verursachten Bewegung des mobilen Elements (20) durchzuführen;
- die erhaltenen Messungen an die Verarbeitungseinheit (22) zu übertragen;

wobei die Verarbeitungseinheit (22) imstande ist:

- eine Ausgangs-Vektorausrichtung bereitzustellen;
- eine erste elementare Vektorausrichtung ($P^1$) des mobilen Elements (20) auf der Basis der relativen Messungen und der vorhergehenden Vektorausrichtung ($P_{k-1}$) zu bestimmen;
- eine zweite elementare Vektorausrichtung ($P^2$) des mobilen Elements (20) auf der Basis der absoluten Messungen zu bestimmen;
- die laufende Vektorausrichtung ($P_k$) des mobilen Elements (20) auf der Basis der ersten elementaren Vektorausrichtung ($P^1$) und der zweiten elementaren Vektorausrichtung ($P^2$) zu bestimmen; und
- einen Steuerbefehl zu der laufenden Vektorausrichtung ($P_k$) des mobilen Elements (20) zuzuordnen.

10. System (10) nach Anspruch 9, wobei die Gruppe von Sensoren (31, 32, 33) ein Gyroskop (31) umfasst, um die Winkelvariation des mobilen Elements (20) um mindestens die vorher festgelegte Achse (X', Y', Z') zu messen, einen Beschleunigungsmesser (32), um die Beschleunigung des mobilen Elements (20) gemäß mindestens der vorher festgelegten Achse (X', Y', Z') zu messen, und ein Magnetometer (33), um den Einfluss eines Magnetfelds auf das mobile Element (20) gemäß mindestens der vorher festgelegten Achse (X', Y', Z') zu messen.

11. System (10) nach Anspruch 9 oder 10, aufweisend, ferner, ein Magnetelement (200), das sich von dem mobilen Element (20) unterscheidet und imstande ist, ein Magnetfeld in der Nähe des mobilen Elements (20) zu erzeugen.

12. System (10) nach Anspruch 11, wobei die Gruppe von Sensoren (31, 32, 33) mehrere Magnetometer aufweist.

## Claims

1. A method for controlling a calculation device (12) via a movable element (20) that can be handled by a user to generate at least one control command associated to the vectorial orientation of the movable element (20), the method being implemented by a control system (10) including a processing unit (22) adapted to communicate with the movable element (20) and the calculation device (12), the movable element (20) including a set of sensors (31, 32, 33) adapted to supply the processing unit (22) with first measurements, called relative measurements, and second measurements, called absolute measurements, characterizing the vectorial orientation of the movable element (20),
the relative measurements comprising an angular variation of the movable element (20) about at least one predetermined axis (X', Y', Z') fixed with respect to the movable element (20) between a previous vectorial orientation ($P_{k-1}$) and a current vectorial orientation ($P_k$),
the absolute measurements comprising the acceleration of the movable element (20) at least according to the predetermined axis (X', Y', Z') and the magnitude of a magnetic field around the movable element (20) at least according to the predetermined axis (X', Y', Z'),
the method including the following steps of:

- supplying an initial vectorial orientation;
- taking measurements (110) by the set of sensors (31, 32, 33) at each movement of the movable element (20) driven by the user;
- determining (131) a first elementary vectorial orientation ($P^1$) of the movable element (20) from the relative measurements and the previous vectorial orientation ($P_{k-1}$);
- determining (132) a second elementary vectorial orientation ($P^2$) of the movable element (20) from the absolute measurements;
- determining (143) the current vectorial orientation ($P_k$) of the movable element (20) from the first elementary vectorial orientation ($P^1$) and from the second elementary vectorial orientation ($P^2$); and
- associating (150) a control command to the current vectorial orientation ($P_k$) of the movable element (20).

2. The control method according to claim 1, further including a step (133) of determining the state of the movement of the movable element (20), the state being a quasi-stationary state or a non-quasi-stationary state.

3. The control method according to claim 2, wherein the step (133) of determining the movement state comprises the comparison of a value corresponding to the rate of change of the orientation of the movable element (20) with a predetermined threshold (S).

4. The control method according to claim 2 or 3, wherein the current vectorial orientation ($P_k$) of the movable element (20) is further determined from a stabilization parameter (K) comprised between 0 and 1, and characterizing the time of stabilization from the non-quasi-stationary state to the quasi-stationary state.

5. The control method according to claim 4, wherein:

   - when the stabilization parameter (K) is comprised between 0.9 and 1, the current vectorial orientation ($P_k$) of the movable element (20) is equal to the first elementary vectorial orientation ($P^1$); and
   - when the stabilization parameter (K) is comprised between 0 and 0.1, the current vectorial orientation ($P_k$) of the movable element (20) is equal to the second elementary vectorial orientation ($P^2$).

6. The control method according to any one of claims 1 to 5, wherein the absolute measurements further comprise the influence of the Earth's gravitational field at least on the predetermined axis (X', Y', Z') of the movable element (20) and the influence of the Earth's magnetic field at least on the predetermined axis of the movable element (20).

7. The control method according to any one of claims 1 to 6, further comprising a step of determining the absolute position of the movable element (20) from the acceleration measured at least according to the predetermined axis (X', Y', Z') of the movable element (20).

8. The control method according to any one of claims 1 to 7, further comprising a step of initial configuration of the control system (10) allowing determining a correspondence between each vectorial orientation of the movable element (20) and a display device (18).

9. A system (10) for controlling a calculation device (12) including:

   - a movable element (20) that can be handled by a user to generate at least one control command associated to the vectorial orientation of the movable element (20) and intended to the calculation device (12);
   - a processing unit (22) adapted to communicate with the movable element (20) and the calculation device (12);

   the movable element (20) including a set of sensors (31, 32, 33) adapted to supply the processing unit (22) with relative measurements and absolute measurements characterizing the vectorial orientation of the movable element (20);
   the relative measurements comprising an angular variation of the movable element (20) about at least one predetermined axis (X', Y', Z') fixed with respect to the movable element (20) between a previous vectorial orientation ($P_{k-1}$) and a current vectorial orientation ($P_k$);
   the absolute measurements comprising the acceleration of the movable element (20) at least according to the predetermined axis (X', Y', Z') and the magnitude of a magnetic field around the movable element (20) at least according to the predetermined axis (X', Y', Z');
   the movable element (20) being adapted to:

   - take measurements by the set of sensors (31, 32, 33) at each movement of the movable element (20) driven by the user; and
   - transmit the obtained measurements to the processing unit (22);

the processing unit (22) being adapted to:

- supply an initial vectorial orientation;
- determine a first elementary vectorial orientation ($P^1$) of the movable element (20) from the relative measurements and the previous vectorial orientation ($P_{k-1}$);
- determine a second elementary vectorial orientation ($P^2$) of the movable element (20) from the absolute measurements;
- determine the current vectorial orientation ($P_k$) of the movable element (20) from the first elementary vectorial orientation ($P^1$) and from the second elementary vectorial orientation ($P^2$); and
- associate a control command to the current vectorial orientation ($P_k$) of the movable element (20).

10. The system (10) according to claim 9, wherein the set of sensors (31, 32, 33) comprises a gyroscope (31) to measure the angular variation of the movable element (20) at least about the predetermined axis (X', Y', Z'), an accelerometer (32) to measure the acceleration of the movable element (20) at least according to the predetermined axis (X', Y', Z'), and a magnetometer (33) to measure the influence of a magnetic field on the movable element (20) at least according to the predetermined axis (X', Y', Z').

11. The system (10) according to claim 9 or 10, further including a magnetic element (200) distinct from the movable element (20) and adapted to generate a magnetic field in the proximity of the movable element (20).

12. The system (10) according to claim 11, wherein the set of sensors (31, 32, 33) includes several magnetometers.

FIG.1

EP 3 289 438 B1

Régime quasi-stationnaire      -133-      Régime non quasi-stationnaire

**FIG.2**

**FIG.3**

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2853992 A1

- US 8527908 B2